# EUROPEAN PATENT APPLICATION

(11) **EP 1 248 463 A2**
(43) Date of publication of application: **09.10.2002**
(21) Application number: 02007643.6
(22) Date of filing: 04.04.2002
(51) Int. Cl.: H04N 7/173

(54) **Television system**

(30) Priority: 07.04.2001 GB 0108790
(71) Applicant: Pace Micro Technology Ltd, Saltaire, Shipley BD18 3LF (GB)
(72) Inventor: Jackson, Paul, Sowerby Bridge, West Yorkshire HX6 3PD (GB)
(74) Representative: Wood, Graham

(57) **Abstract**

The invention relates to a television system which includes a communication link between a broadcast data receiver at a user location and the broadcaster. The communication link is used to carry data indicative of user selections made to control the broadcast data receiver such as programme or channel selections. This data can be used by the broadcaster to generate information to recommend programmes and/or other information related to the user selection and broadcast the same to the user's BDR.

## Description

The present invention relates to a television system including a broadcast data receiver connected to a display screen.

The broadcast data receiver (BDR) referred to in the following description receives audio, video and/or auxiliary data from a broadcaster at a remote location via satellite, cable or terrestrial means. The BDR processes the received data and displays video data for viewing on the display screen and audio data for listening via speakers connected to the television system. The video and audio data relates to programmes for viewing by the user.

At least some of the received auxiliary data is used to produce an electronic programme guide (EPG) display for providing programme information and schedules for viewing by a user. The television system is typically provided with a remote control handset to allow a user to select and/or control the functions of the EPG.

Conventional EPGs are typically provided with a number of user-selectable facilities which are reliant on the EPG for control of operation, such facilities including for example the ability to pre-select the recording of a particular programme via a tape or hard disk memory and/or generating on screen reminders to remind users of the showing of a pre-selected programme. A further user-selectable facility is the provision of means to allow a user to select the identities of a number of television and/or radio channels and store means identifying said channels in memory and for subsequent generation of a display of said favourite channels. A key or keys is/are provided on the remote control to allow the user to depress the same and in response to the signal generated the BDR generates the display of the favourite channels as part of the EPG and through which the user can select to view a channel using standard remote control signals rather than having to tune into all the available channels displayed on the EPG, many of which they may not wish to watch. This is particularly advantageous as the number of available channels with digital television systems is ever increasing and so the size of the EPG display increases.

As a result of the time taken for a user to select and the BDR to tune into each of a plurality of channels in turn, when a user is looking for something suitable to watch on television, they will often prefer to select and tune into each of the channels from their favourite list of channels/programmes rather than browsing through all the channels that are available. In addition, as the EPG displays are often extensive due to the large number of channels user may miss identifying and/or watching many programmes which may be of interest to them.

It is therefore an aim of the present invention to provide means for notifying a user of one or more programmes which are available for viewing and/or listening and that may be of interest to them.

According to a first aspect of the present invention there is provided a television system including a broadcast data receiver for receiving video, audio and/or auxiliary digital data broadcast from a remote location, said BDR processing received video data for viewing on a display screen connected to said receiver, audio data for listening via speakers and said video and audio data relating to a plurality of programmes, and control means are provided to allow a user of said television system to select at least one of said plurality of programmes and/or select a subject of interest and characterised in that information relating to said selection is communicated to the broadcaster of the data and, using this information as an indication of the user's interests, said broadcaster communicates information relating to one or more programmes recommended by the broadcaster to the user's broadcast data receiver.

Preferably the selection made by the user is to select a programme or list of programmes (favourite programmes) and said selection data is stored in a memory in the broadcast data receiver (BDR) prior to being communicated to the broadcaster.

Preferably user selections are allocated on a "per user" basis, rather than a "per BDR basis". Typically, each user is provided with a identification to which a portion of the memory is allocated and used by the system to identify the user for which the broadcaster recommendations are intended.

Preferably a group of the users selection data is communicated to the broadcaster from the memory at pre-determined time intervals.

In an alternative embodiment, the users selection data is only communicated, after the first communication, to the broadcaster following a change or changes made to the user selection.

Preferably the broadcaster recommended programmes are communicated to the BDR at pre-determined time intervals and/or after a change has been made to the user's favourite programme list.

Preferably the broadcaster recommended programme(s) include any programme which is the same or similar to the users selected programmes, including any or any combination of similar subject matter, similar title, the same actors/actresses and/or the like.

Preferably a database of a plurality of user's favourite programmes is provided and maintained by the broadcaster.

Preferably the same one or more recommended programmes are sent from the broadcaster to a plurality of users having similar selection criteria.

Preferably the one or more recommended programmes sent from the broadcaster to a particular user include details of the programmes on other system user's selections which have at least one programme in common with the particular user's selection.

In one embodiment a pre-defined number of users must be identified as having made the same programme selection prior to the broadcaster recommending the programme to a user.

In a further embodiment the broadcaster recommends one or more programmes of a similar type to one or more programmes on a user's selection.

Preferably in addition to the broadcaster communicating a list of recommended programmes, other information can be provided including statistics relating to the number of user's having a particular programme on their favourite list and/or the like.

In one embodiment, at the end of a pre-determined programme or programmes, a ratings message can be displayed on the display screen. The ratings message requests the user to provide a rating for the programme that the viewer has just watched. For example, the fast text keys on a remote control unit can be used for the user to select whether they thought the programme was bad, poor, okay or excellent. Alternatively the user can provide a score out of ten by depressing one of the key pads labelled 0-9, 0 being poor and 9 very good, on the remote control in response to the ratings message.

Preferably the rating scores are transmitted to the broadcaster headend database at pre-determined intervals. Subsequent recommendations of a particular programme can then be based on the ratings scored previously received for the programme for people with similar favourite programmes selected as the viewer.

According to a second aspect of the present invention there is provided a method of notifying a user of a television system of one or more television programmes that may be of interest to them, said television system including a broadcast data receiver for receiving video, audio and/or auxiliary digital data from a broadcaster at a remote location and processing said video data for viewing on a display screen connected to said receiver and/or audio for listening via speakers, said data relating to a plurality of television programmes and characterised in that said method includes the steps of a user selecting one or more programmes of interest on a display on the screen using control means, data representing said user selected programmes being communicated via said broadcast data receiver to said broadcaster, said broadcaster subsequently communicating information to said broadcast data receiver relating to one or more broadcaster recommended programmes based on said user selected programmes.

The provision of a database of user's favourite programmes allows the broadcaster to match users having similar viewing tastes/preferences. It also allows the broadcaster to get feedback on which programmes the viewers consider are worth assigning to their favourite lists.

An embodiment of the present invention will now be described with reference to;
Figure 1 which illustrates in schematic fashion the apparatus of the system; and
Figure 2 which illustrates the system in use.

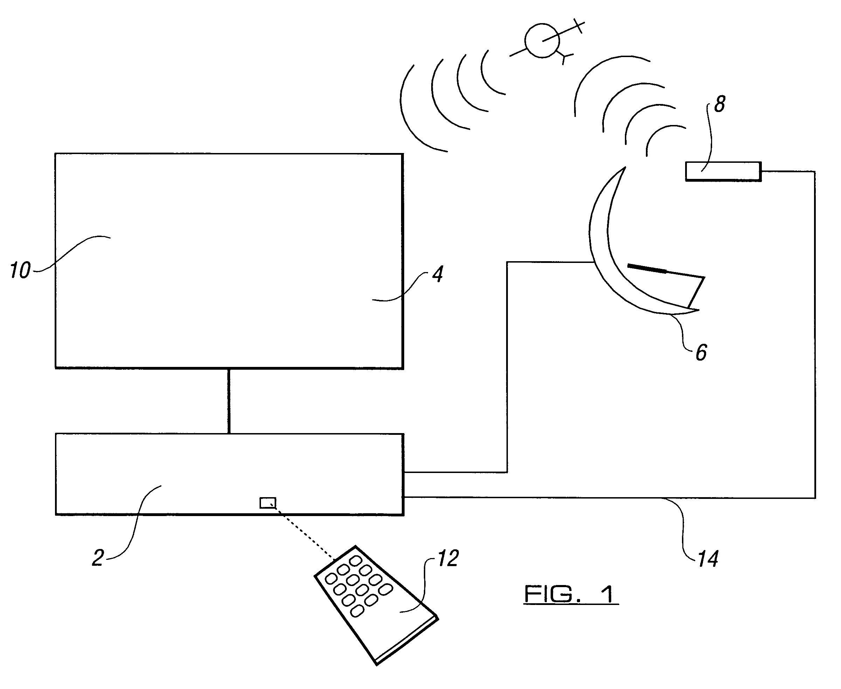

A television system is provided and as shown in Figure 1, comprising a broadcast data receiver 2 connected to a television set 4. The broadcast data receiver receives digital data from a broadcaster at a remote location 8 via this embodiment a satellite antenna 6 at the user's premises and processes the audio, video and auxiliary data for display.

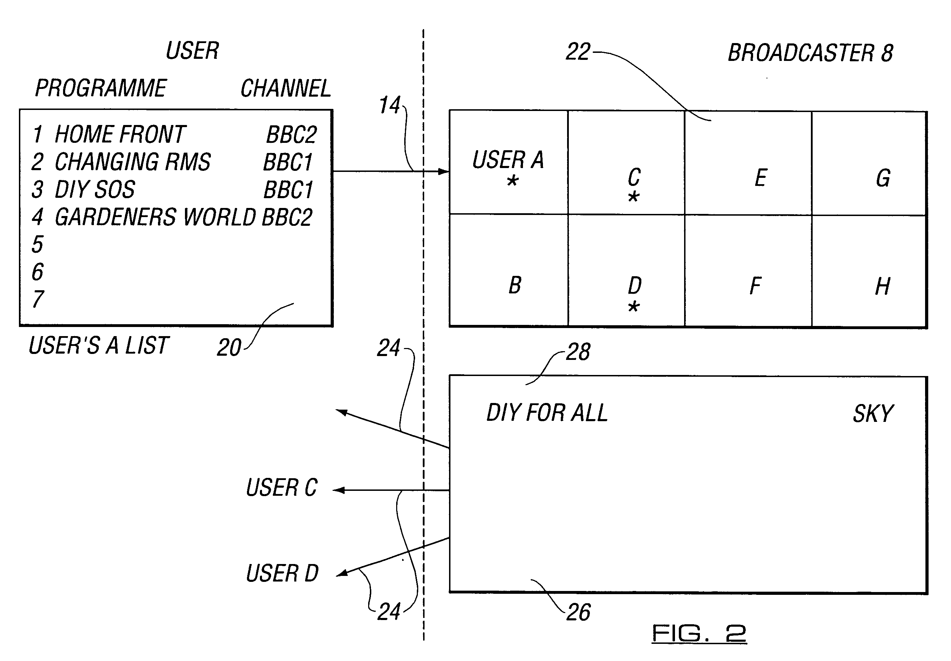

At least some of the auxiliary data provides an EPG display on screen 10 which provides programme information to the viewer. The viewer is provided with a remote control handset 12 which allows operation of a number of functions of the television system and allows a user to make a number of selections such as, for the purpose of this example, as shown in Figure 2 to select a number of programmes from the EPG to include on a favourites list of programmes 20.

When selected the favourites list 20 is stored in a memory in the broadcast data receiver 2 and, at pre-determined time intervals, information data representing the identity of the programmes in the favourites list is transmitted from the receiver 2 to the broadcaster 8, where the information is stored in a database. The information data is transmitted via a communication link 14 via a telecommunication network.

The database 22 at the broadcaster illustrated for example purposes in this diagram comprises the favourite listings of a plurality of system users. The database allows analysis by the broadcaster and comparisons of the user's selections to be undertaken. Users having similar tastes in programmes can be matched and grouped as in this case users A, C, D. A list 26 of recommended programmes can then be formed by the broadcaster based on the matched user's favourite lists and this recommended programme list is transmitted 24 to all the users A, C, D within that matched group.

In a specific example, 50,000 users are found by broadcaster analysis to have the same Do-It-Yourself (DIY) programmes on their respective selection for their favourite lists. A new DIY programme 28 is to be broadcast by the broadcaster and to ensure that the 50,000 users are aware of the new programme and can start to watch the new DIY programme, the broadcaster transmits the details of the new programme on the broadcaster recommended programmes data transmitted to the 50,000 users.

Thus the present invention allows matching of user's having similar viewing tastes so that if a first proportion of the users watch a particular programme which the remaining proportion of the users do not appear to watch, it may be that the remaining proportion of users are unaware of the programme and would start watching the programme if they were recommended by the broadcaster to watch the programme.

Statistics can be included with the list of recommended programmes received from the broadcaster, such as how many viewers had the programme on their favourite list and/or similar.

The broadcaster recommended programmes can be sent to the viewer's BDR using a private/proprietary MPEG/DVB table, a cable modem and/or the like. The broadcaster can typically identify the user's list of favourite programmes for storage in the database over other transmitted data by adding a PID value to the data.

The list of broadcaster recommended programmes when received at the users BDR can be displayed automatically on the display screen and/or can be provided in a menu of the EPG which the user can choose to view if desired. Alternatively, an indication can be provided against the recommended programmes on the EPG display. The user is also able to switch on/off the ability for a broadcaster to identify the programmes on the users favourite list. The recommended programmes are typically for showing within a pre-determined period, such as for a 24 hour period.

The invention therefore provides the broadcaster with the ability to provide further service information to users to encourage them to watch particular programmes and hence improve the viewing figures. However, importantly, the broadcaster can focus the recommended programmes to a particular user or users as a result of the received data representing user selections. This therefore improves the effectiveness of the recommendation in terms of relevance and chance of the user reacting to the same.

## Claims

1. A television system including a broadcast data receiver (BDR) for receiving video, audio and/or auxiliary digital data broadcast from a remote location said BDR processing received video data for viewing on a display screen connected to said receiver audio data for listening via speakers and, said video and audio data relating to a plurality of programmes, and control means are provided to allow a user of said television system to select at least one of said plurality of programmes and/or select a subject of interest and **characterised in that** information relating to said selection is communicated to the broadcaster of the data and, using this information as an indicator of the user's interests, said broadcaster communicates information relating to one or more programmes recommended by the broadcaster to the users BDR.

2. A system according to claim 1 **characterised in that** the user's selection is to select a programme or list of programmes and said selection data is/are stored in a memory of the broadcast data receiver (BDR) prior to being communicated to the broadcaster.

3. A system according to claim 1 **characterised in that** the broadcaster recommended programmes are broadcast on a per viewer basis rather than a per BDR basis as, prior to the viewer selection being made, the viewer enters into the BDR, a unique viewer identity code.

4. A system according to claim 1 **characterised in that** the user's selection data is communicated to the broadcaster at predetermined time intervals.

5. A system according to claim 1 wherein the user's selection data is only communicated to the broadcaster, following the first communication, following a change or changes made to the user selection.

6. A system according to claim 1 **characterised in that** the broadcaster recommended programmes includes any programme which is the same or similar to the user's selected programme which include any or any combination of similar subject matter, similar title, the same actors/actresses.

7. A system according to claim 1 **characterised in that** the system includes a database of a plurality of users' favourite programmes provided at the broadcaster location and held in memory.

8. A system according to claim 1 **characterised in that** the same one or more recommended programmes are sent from the broadcaster to a plurality of users having similar selection data.

9. A system according to claim 1 **characterised in that** the one or more recommended programmes sent from the broadcaster to a particular user include the programmes on other user's selections which include at least one programme in common with that particular user's selection data.

10. A system according to claim 1 **characterised in that** the broadcaster recommends one or more programmes of a similar type to one or more programmes on a user's favourite list.

11. A system according to claim 1 **characterised in that** in addition to the broadcaster communicating a list of recommended programmes, other information is provided including statistics relating to the number of users having a particular programme on their favourite list and/or the like.

12. A system according to claim 1 **characterised in that** at the end of a predetermined programme or programmes, a ratings message is displayed on the display screen requesting the user to provide a rating for the programme that the viewer has just watched.

13. A system according to claim 12 wherein the rating indicated by the viewer is transmitted to a broadcaster at predetermined intervals.

14. A method of notifying a user of a television system of one or more television programmes that may be of interest to them, said television systems including a broadcast data receiver for receiving video, audio and/or auxiliary digital data from a broadcaster at a remote location and processing said video data for viewing on a display screen connected to said receiver and/or audio for listening via speakers, said data relating to a plurality of television programmes and **characterised in that** the said method includes the steps of a user selecting one or more programmes of interest on a display on the screen using control means, said user selected programmes being communicated via said broadcast data receiver to said broadcaster, said broadcaster subsequently communicating information to said broadcast data receiver relating to one or more broadcaster recommended programmes based on said user selected programmes.
